Europäisches Patentamt

European Patent Office

Office européen des brevets

(19)

(11) Publication number: **0 447 099 A2**

# EUROPEAN PATENT APPLICATION

(12)

(21) Application number: **91301804.0**

(22) Date of filing: **05.03.91**

(51) Int. Cl.⁵: **B60R 22/10**

(30) Priority: **15.03.90 GB 9005797**

(43) Date of publication of application:
**18.09.91 Bulletin 91/38**

(84) Designated Contracting States:
**DE FR IT**

(71) Applicant: **BRITAX RÖMER Kindersicherheit GmbH**
**Blaubeurer Strasse 71 Postfach 3449**
**W-7900 Ulm/Donau (DE)**

(72) Inventor: **Czernakowski, Waldemar**
**Ferdinand-Sauerbruch Strasse 3**
**W-7606 Blaustein 1 (DE)**
Inventor: **Wetter, Hermann**
**Alpenstrasse 60**
**W-7900 Ulm (DE)**

(74) Representative: **Hollinghurst, Antony**
**Britax Limited Patent Department**
**Chichester West Sussex PO19 2AQ (GB)**

(54) Safety restraint device.

(57)   A safety restraint device for use by children in passenger vehicles comprises a protective table (14) arranged to be located on a seat surface (12) so as to extend in front of the child above the child's knees and to be held in place by an adult lap belt (18). The protective table (14) has a lower portion (30) adapted to be supported at a fixed height above the seat surface (12), and an upper portion (32), connected to the lower portion (30) so as to allow variation of the height of the rear edge of the upper portion (32) relative to said seat surface (12). Blocking means (38) is insertable between the upper portion (32) and the lower portion (30) to resist movement of the upper portion (32) towards said seat surface (12).

*Fig. 3.*

*Fig. 4.*

EP 0 447 099 A2

# SAFETY RESTRAINT DEVICE

This invention relates to a safety restraint device for use by children in passenger vehicles of the type comprising a protective table arranged to be located on a seat surface in front of the child above the child's knees and to be held in place by an adult lap belt. A protective table of this type is disclosed in Patent Specification GB-A-1546465.

The ideal height for a protective table of this type depends on the size of the child who is to use it and consequently increases as the child grows. The present invention aims to provide means for adjusting the height of the rear edge of a protective table.

According to the invention, a protective table comprises a lower portion adapted to be supported at a fixed height in relation to a seat surface, an upper portion, coupling means connecting the upper portion to the lower portion so as to allow variation of the height of the rear edge of the upper portion relative to said seat surface, and blocking means insertable between the upper portion and the lower portion to resist movement of the upper portion towards said seat surface.

Preferably, the coupling means is a pivot pin adjacent to the front of the protective table connecting the upper portion to the lower portion for relative angular movement.

In one form of the invention, the blocking means comprises a blocking member which is pivotally movable for angular movement about a transverse axis adjacent to the rear of the table.

In another form of the invention, the blocking means comprises a blocking member which is insertable into a cavity between the upper and lower portions in any of a plurality of different orientations.

In yet another form of the invention, the blocking means comprises a wedge member which is displaceable along a cavity formed between the upper and lower portions.

Three embodiments of the invention will now be described, by way of example, with reference to the accompanying drawings, in which:

Figure 1 is a schematic side view of a protective table in accordance with the invention, adjusted for use by a relatively small child;

Figure 2 is a schematic view similar to Figure 1 but showing the table in a configuration suitable for use by a larger child;

Figure 3 is a schematic side view of the table shown in Figure 1 equipped with blocking means in accordance with a first embodiment of the invention;

Figure 4 is a schematic side view of the embodiment shown in Figure 3 but with the table in the configuration shown in Figure 2;

Figures 5 and 6 are schematic side views, corresponding to Figures 3 and 4 respectively, showing blocking means in accordance with the second embodiment of the invention;

Figure 7 is a transverse cross-sectional view of a protective table in accordance with a third embodiment of the invention;

Figure 8 is a cross-sectional view taken on the line 8 - 8 in Figure 7 and showing the section line 7 - 7 for Figure 7;

Figure 9 is a cross-sectional view taken on the line 9 - 9 in Figure 7 and showing the section line 7 - 7 for Figure 7; and

Figure 10 is a cross-sectional view, similar to Figure 8 but showing the protective table in a configuration corresponding to that of Figure 2.

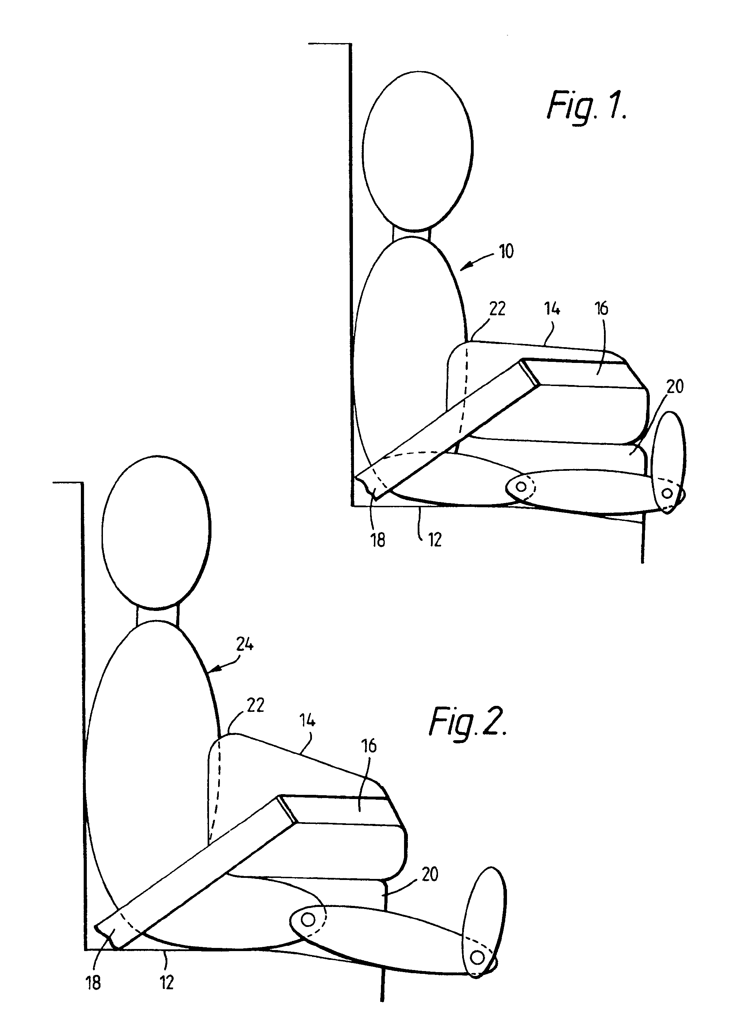

Figure 1 shows, in outline, a dummy 10 representing a relatively small child seated on a vehicle seat 12. A protective table 14 in accordance with the invention has a horizontal slot 16 in its front face for receiving an adult lap safety belt 18. The protective table rests on supports 20 located on each side of the dummy's legs. As can be seen, the rear edge 22 is located at a height approximately half way up the torso of the dummy 10.

Figure 2 shows a larger dummy 24 on the seat 12. The configuration of the protective table 14 has been altered so that its rear edge 22 is half way up the torso of this larger dummy 24.

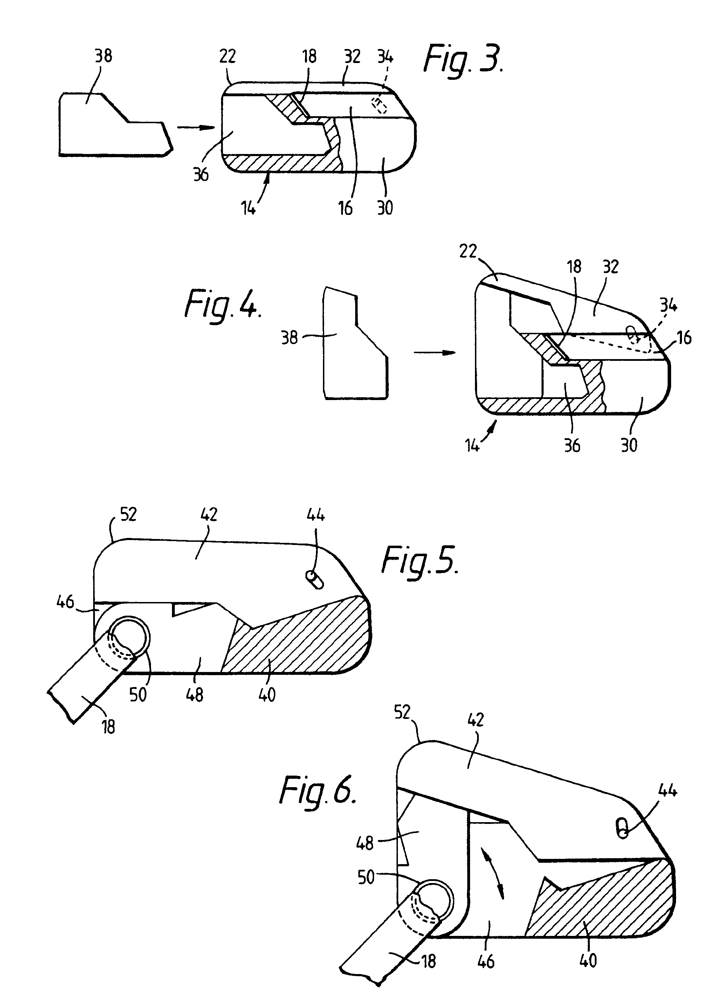

Referring to Figures 3 and 4, the protective table 14 comprises a lower portion 30 which rests on the supports 20 and an upper portion 32 which is pivotally connected to the lower portion 30 by a transverse pivot pin 34. An irregularly shaped cavity 36 is formed in the rear part of the lower portion 30, the length of the bottom portion of the cavity 36 being greater than its height. A correspondingly shaped blocking member 38 can be inserted into the cavity 36, either in the orientation shown in Figure 3, in which it substantially fills the cavity 36, or in the orientation shown in Figure 4 in which it projects upwardly above the top of the lower portion 30 so as to support the rear edge 22 of the upper portion in the position shown in Figure 2.

Figures 5 and 6 show an alternative embodiment of the invention consisting of a protective table having a lower portion 40 pivotally connected to an upper portion 42 by a transverse pivot pin 44. The lower portion 40 is approximately U-shaped in plan view, having a pair of rearwardly extending limbs 46 between which a blocking member 48 is pivotally mounted on a tubular shaft 50.

The adult lap belt 18 projects through the shaft 50. The blocking member 48 can pivot between the position shown in Figure 5 in which the rear edge 52 of the upper member 42 is at a height corresponding to that illustrated in Figure 1, and the position shown in Figure 6 in which the rear edge 52 is a position corresponding to that shown in Figure 2.

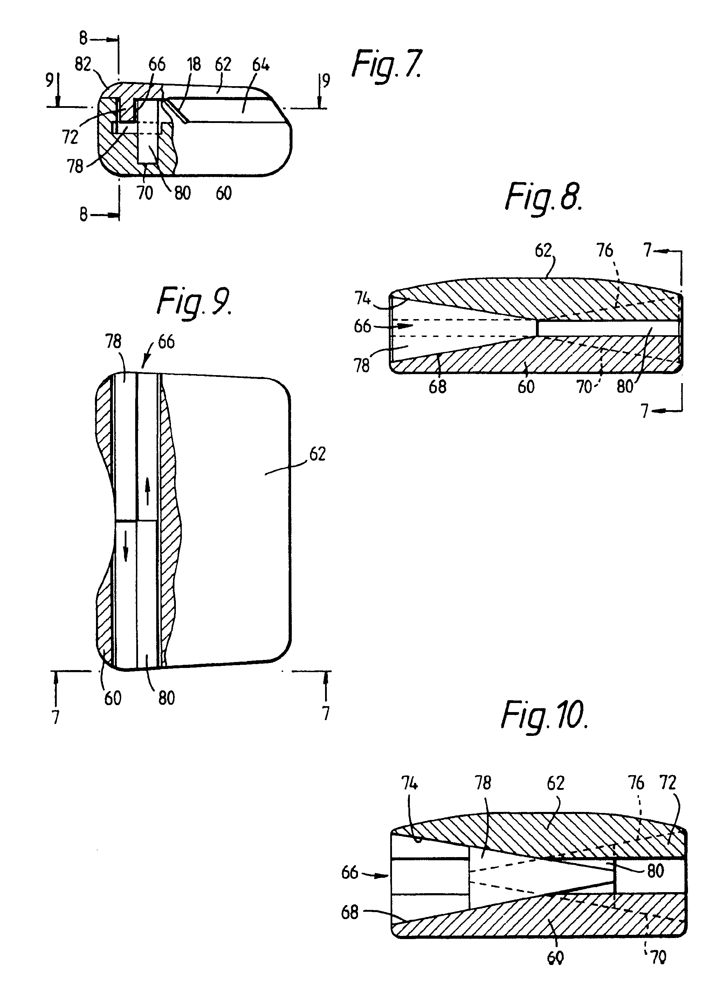

Figures 7 to 10 illustrate another protective table in accordance with the invention having a lower portion 60 pivotally connected to an upper portion 62 by a pivot pin (not shown) adjacent to its front end. A horizontal slot 64 is formed in the front of the protective table for receiving the adult lap belt 18.

Behind the horizontal slot 64, the lower portion 60 has a vertical transverse slot 66 in its upper surface, the rear half of which is cut away to form a tapering bottom surface 68 on one side of the seat while the front portion is cut away to form a similar tapering surface 70 on the other side of the seat. The upper member 62 has a projection 72 which extends downwardly into the slot 66 and has a tapering surface 74 opposite the surface 68 and a similar tapering surface 76 opposite the surface 70. A first wedge 78 engages between the surfaces 68 and 74 and a second wedge 80 extends between the surfaces 70 and 76. By moving the wedges towards one another from the position shown in Figures 7 to 9 to the position shown in Figure 10, the rear edge 82 of the upper portion 62 can be raised from a position corresponding to that illustrated in Figure 1 to a higher position corresponding to that illustrated in Figure 2.

## Claims

1. A safety restraint device for use by children in passenger vehicles comprising a protective table (14) arranged to be located on a seat surface (12) so as to extend in front of the child above the child's knees and to be held in place by an adult lap belt (18), characterised in that the protective table (14) comprises a lower portion (30, 40, 60) adapted to be supported at a fixed height in relation to the seat surface (12), an upper portion (32, 42, 62), coupling means (34) connecting the upper portion to the lower portion (30, 40, 60) so as to allow variation of the height of the rear edge of the upper portion (32, 42, 62) relative to said seat surface (12), and blocking means (38, 48, 78, 80) insertable between the upper portion (32, 42, 62) and the lower portion (30, 40, 60) to resist movement of the upper portion (32, 42, 62) towards said seat surface (12).

2. A restraint device according to claim 1, wherein the coupling means is a pivot pin (34, 44) adjacent to the front of the protective table (14) connecting the upper portion (32, 42, 62) to the lower portion (30, 40, 60) for relative angular movement.

3. A restraint device according to claim 1 or 2, wherein the blocking means comprises a blocking member (48) which is pivotally movable for angular movement about a transverse axis (50) adjacent to the rear of the table.

4. A restraint device according to claim 1 or 2, wherein the blocking means comprises a blocking member (38) which is insertable into a cavity between the upper portion (32) and the lower portion (30) in any of a plurality of different orientations.

5. A restraint device according to claim 1 or 2, wherein the blocking means comprises a wedge member (78, 80) which is displaceable along a cavity (66) formed between the upper portion (62) and the lower portion (60).

Fig. 1.

Fig. 2.

Fig. 3.

Fig. 4.

Fig. 5.

Fig. 6.

Fig. 7.

Fig. 8.

Fig. 9.

Fig. 10.